# EUROPÄISCHE PATENTANMELDUNG

(11) **EP 3 940 220 A1**
(43) Veröffentlichungstag der Anmeldung: **19.01.2022**
(21) Anmeldenummer: 21185269.4
(22) Anmeldetag: 13.07.2021
(51) Int. Cl.: F02F 3/00, F16J 1/08, F16J 1/09, F16J 9/20

(54) **KOLBEN FÜR EINE BRENNKRAFTMASCHINE**

(30) Priorität: 17.07.2020 DE 102020208998
(71) Anmelder: MAHLE International GmbH, 70376 Stuttgart (DE)
(72) Erfinder: BISCHOFBERGER, Ulrich, 73732 Esslingen (DE); BRAIG, Ralf, 73614 Schorndorf (DE); SCHREER, Kai, 75446 Wiernsheim (DE); STEFAN, Ioan, 70567 Stuttgart (DE)
(74) Vertreter: BRP Renaud & Partner mbB Rechtsanwälte Patentanwälte Steuerberater

(57) **Zusammenfassung**

Die Erfindung betrifft einen Kolben (1) für eine Brennkraftmaschine, insbesondere für ein Kraftfahrzeug. Der Kolben (1) umfasst eine sich entlang einer axialen Richtung (A) erstreckende Ringpartie (2), an dessen Außenumfang (3) eine Nut (4) für einen Ölabstreifring ausgebildet ist. Am Außenumfang (3) ist in der axialen Richtung (A) im Abstand zur Nut (4) eine Zusatznut (5) angeordnet, die eine der Nut (4) axial abgewandte erste Nutflanke (6a) und eine der Nut (4) axial zugewandte zweite Nutflanke (6b) aufweist. Die erste Nutflanke (6a) der Zusatznut (5) weist eine axiale Stufe (7) auf.

## Beschreibung

Die Erfindung betrifft einen Kolben für eine Brennkraftmaschine sowie eine Brennkraftmaschine mit einem solchen Kolben. Die Erfindung auch schließlich ein Verfahren zum Herstellen eines solchen Kolbens.

Kolben für Brennkraftmaschinen weisen typischerweise eine Ringpartie auf, in welcher neben Nuten zur Aufnahme von Kompressionsringen auch eine Aufnahmenut zum Aufnehmen eines Ölabstreifrings ausgebildet sein kann. Eine solche Aufnahmenut - im Folgenden der Einfachheit halber als "Nut" bezeichnet - kann axial auf einer Außenumfangsfläche bzw. auf einem Außenumfang des die Ringpartie bildenden axialen Bereichs des Kolbens vorgesehen sein. Der in dieser Nut angeordnete Ölabstreifring dient dazu, an Zylinderlauffläche angesammeltes Öl abzustreifen, sodass es in ein Kurbelgehäuse der Brennkraftmaschine zurückgeführt werden kann. Soll auch Öl an die Schaftfläche des sich axial an die Ringpartie anschließenden Kolbenschafts abgeleitet werden, so ist es bekannt, zusätzlich zur Aufnahmenut für den Ölabstreifring axial im Abstand zu dieser eine weitere Zusatznut vorzusehen, in welcher Öl gesammelt werden kann, das vom Ölabstreifring abfließt.

Derartige Zusatznuten sind beispielsweise in der JP 2002013441 A sowie in der US 2005/0087153 A1 beschrieben.

Es ist eine Aufgabe der vorliegenden Erfindung, bei der Entwicklung von Kolben, die mit einer voranstehend vorgestellten Zusatznut ausgestattet sind, neue Wege aufzuzeigen. Insbesondere sollen Lösungen gefunden werden, bei welchen die Rückführung von gesammeltem Öl in das Kurbelgehäuse mithilfe der Zusatznut verbessert wird. Gleichzeitig soll bei einer solchen Lösung die Zusatznut besonders einfach herstellbar sein.

Grundidee der Erfindung ist demnach, zum besonders effektiven Sammeln von Öl die von der Nut für den Ölabstreifring abgewandte Nutflanke der Zusatznut - diese wird im Folgenden als "erste Nutflanke" bezeichnet - mit einer axialen Stufe auszustatten. Experimentelle Untersuchungen haben gezeigt, dass eine solche axiale Stufe bewirkt, dass besonders umfangreich Öl vom Ölabstreifring in der Zusatznut abgestreift und somit gesammelt werden kann, von wo es dann wieder in das Kurbelgehäuse zurückgeführt werden kann.

Eine solche Zusatznut mit einer an der ersten Nutflanke ausgebildeten axialen Stufe ist sehr einfach herzustellen, da in einem ersten Schritt die eigentliche Zusatznut mittels Abtragung von Kolbenmaterial erzeugt und - in einem zweiten Schritt - durch anschließendes Erzeugen einer "Verbreiterung" - mittels Abtragung von weiterem Kolbenmaterial - mit geringerer Nut-Tiefe als bei der im ersten Schritt ursprünglich erzeugte Zusatznut - die gewünschte axiale Stufe in der Nutflanke der Zusatznut erzeugt werden kann. Ein separater, zusätzlicher Herstellungsschritt für die Erzeugung der erfindungswesentlichen axialen Stufe kann also entfallen.

Ein erfindungsgemäßer Kolben für eine Brennkraftmaschine, insbesondere für ein Kraftfahrzeug, umfasst eine sich entlang einer axialen Richtung erstreckende Ringpartie. Am Außenumfang des Kolbens ist eine entlang der Umfangsrichtung des Kolben umlaufende Nut zur Aufnahme eines Ölabstreifrings ausgebildet. Weitere Nuten zur Aufnahme von Kompressionsringen können ebenfalls vorgesehen sein. Ferner umfasst der Kolben eine am Außenumfang axial im Abstand zur Nut angeordnete und ebenfalls in Umfangsrichtung des Kolbens umlaufende Zusatznut, die eine axial von der Nut zur Aufnahme des Ölabstreifrings abgewandte erste Nutflanke und eine axial dieser Nut zugewandte zweite Nutflanke aufweist. Die beiden Nutflanken können in bekannter Weise durch einen Nutgrund miteinander verbunden sein, der sich bevorzugt in axialer Richtung erstreckt. Besagte Zusatznut ist dabei axial auf einer vom Kolbenboden bzw. Feuersteg des Kolbens abgewandten Seite der Nut angeordnet, die zur Aufnahme des Ölabstreifrings dient. Erfindungsgemäß weist die erste Nutflanke der Zusatznut, insbesondere in einem Längsschnitt entlang der axialen Richtung, eine axiale Stufe auf. Es versteht sich, dass der Begriff "axiale Stufe" nicht ausschließlich einen streng axialen - also zur axialen Richtung parallelen - Verlauf der Stufe vorschreibt, die in diesem Fall eine zylindrische Gestalt aufweist, sondern darüber hinaus davon abweichende axiale Verläufe und entsprechende Gestalten der Stufe umfassen kann. So kann die axiale Stufe insbesondere leicht konisch ausgebildet sein.

Gemäß einer bevorzugten Ausführungsform ist eine entlang einer radialen Richtung der Ringpartie gemessene erste Flankenhöhe der ersten Nutflanke größer als eine ebenfalls entlang der radialen Richtung gemessene zweite Flankenhöhe der zweiten Nutflanke. Auf diese Weise wird sichergestellt, dass in einem axialen Abschnitt des Kolbens bzw. der Ringpartie, der zwischen der Nut und der Zusatznut angeordnet ist, bei im Zylinder montierten Kolben zwischen dem Außenumfang des Kolbens bzw. der Ringpartie und der Zylinderlauffläche ein Zwischenraum gebildet ist, durch welchen Öl von der Nut mit dem Ölabstreifring zur Zusatznut strömen kann.

Gemäß einer vorteilhaften Weiterbildung weist die erste Nutflanke einen radial inneren Flankenabschnitt auf, der radial nach außen über die axiale Stufe in einen radial äußeren Flankenabschnitt übergeht. Bei dieser Weiterbildung ist eine entlang der radialen Richtung der Ringpartie gemessene Abschnittshöhe des radial inneren Flankenabschnitts gleich der zweiten Flankenhöhe. Diese Variante ist sehr einfach herstellbar, da die axiale Stufe und eine von der zweiten Nutflanke axial begrenzte radiale Ringrippe in ein und demselben Herstellungsschritt - durch radiales Abtragen des betreffenden Kolbenmaterials - simultan erzeugt werden können. Die Flankenabschnitte können konisch ausgebildet sein.

Gemäß einer weiteren bevorzugten Ausführungsform ist ein entlang einer radialen Richtung der Ringpartie gemessener Radius der Ringpartie in einem ersten Axialabschnitt, der axial zwischen der Nut und der Zusatznut angeordnet ist, kleiner als in einem zweiten Axialabschnitt, der sich auf einer von der Nut abgewandten Seite axial an die Zusatznut anschließt.

Zweckmäßig bildet der erste Axialabschnitt eine am Außenumfang der Ringpartie umlaufende Ringrippe aus. Diese Ringrippe wird axial von der Zusatznut, insbesondere deren zweiter Nutflanke und von der Nut zur Aufnahme des Ölabstreifrings begrenzt.

Gemäß einer vorteilhaften Weiterbildung weist die Ringrippe wenigstens einen Ölkanal auf, welcher die Nut fluidisch mit der Zusatznut verbindet. Auf diese Weise kann mithilfe des Ölabstreifrings in der Nut gesammeltes Öl an die Zusatznut weitergegeben und von dort an das Kurbelgehäuse der Brennkraftmaschine zurückgeführt werden. Bevorzugt sind entlang der Umfangsrichtung zwei oder mehrere solche Ölkanäle, besonders bevorzugt im Abstand zueinander, angeordnet.

Zweckmäßig kann der wenigstens eine Ölkanal durch eine Sackbohrung gebildet sein. Diese Variante ist besonders kostengünstig herstellbar.

Zweckmäßig ist die axiale Stufe der ersten Nutflanke durch einen sich entlang der axialen Richtung erstreckenden ersten Stufenabschnitt gebildet, der unter einem 90°-Winkel in einen sich entlang der radialen Richtung erstreckenden zweiten Stufenabschnitt übergeht. Auch diese Ausführungsform kann besonders einfache Weise hergestellt werden. In Varianten kann auch anstelle eines rechten Winkels auch ein stumpfer oder spitzer Winkel vorgesehen sein.

Als besonders einfach herzustellen erweist sich eine weitere vorteilhafte Weiterbildung, gemäß welcher der radial innere Flankenabschnitt der zweiten Nutflanke den zweiten Stufenabschnitt umfasst oder der zweite Stufenabschnitt ist. Bei dieser Weiterbildung geht der erste Stufenabschnitt bevorzugt mittels einer Verrundung in den radial äußeren Flankenabschnitt über.

Besonders bevorzugt weist die Verrundung einen Innenradius von 0,25 mm bis 1,0 mm, besonders bevorzugt einen Innenradius von ca. 0,5 mm, auf.

Zweckmäßig kann sich ein zwischen den beiden Nutflanken gebildeter Nutgrund entlang der axialen Richtung erstrecken.

Besonders zweckmäßig ist am Außenumfang des Kolbens ein entlang der axialen Richtung gemessener Abstand zwischen der ersten und der zweiten Nutflanke der Zusatznut größer als eine ebenfalls entlang der axialen Richtung gemessene Erstreckung des Nutgrunds dieser Zusatznut.

Besonders zweckmäßig ist ein Übergang vom Nutgrund in die erste oder/und zweite Nutflanke durch eine Verrundung gebildet, die vorzugsweise einen Innenradius von 0,25 mm bis 1,0 mm, besonders bevorzugt einen Innenradius von ca. 0,5 mm, aufweist.

Die Erfindung betrifft ferner Brennkraftmaschine, insbesondere für ein Kraftfahrzeug, mit einem voranstehend vorgestellten, erfindungsgemäßen Kolben, sodass sich die voranstehend erläuterten Vorteile des erfindungsgemäßen Kolbens auch auf die erfindungsgemäße Brennkraftmaschine übertragen. Die Brennkraftmaschine weist dabei einen Zylinder mit einer Zylinderlauffläche auf, in welchem der Kolben derart beweglich geführt ist, dass der erste Axialabschnitt der Ringpartie des Kolbens zwischen der Nut und der Zusatznut im Abstand zur Zylinderlauffläche angeordnet ist.

Die Erfindung betrifft schließlich ein Verfahren zum Herstellen des erfindungsgemäßen Kolbens, sodass sich die voranstehend erläuterten Vorteile des erfindungsgemäßen Kolbens auch auf das erfindungsgemäße Verfahren übertragen.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: in einer Detaildarstellung eines Schnitts ein Beispiel eines erfindungsgemäßen Kolbens,
- Fig. 2: eine Schnittdarstellung eines weiteren Beispiels eines erfindungsgemäßen Kolbens.

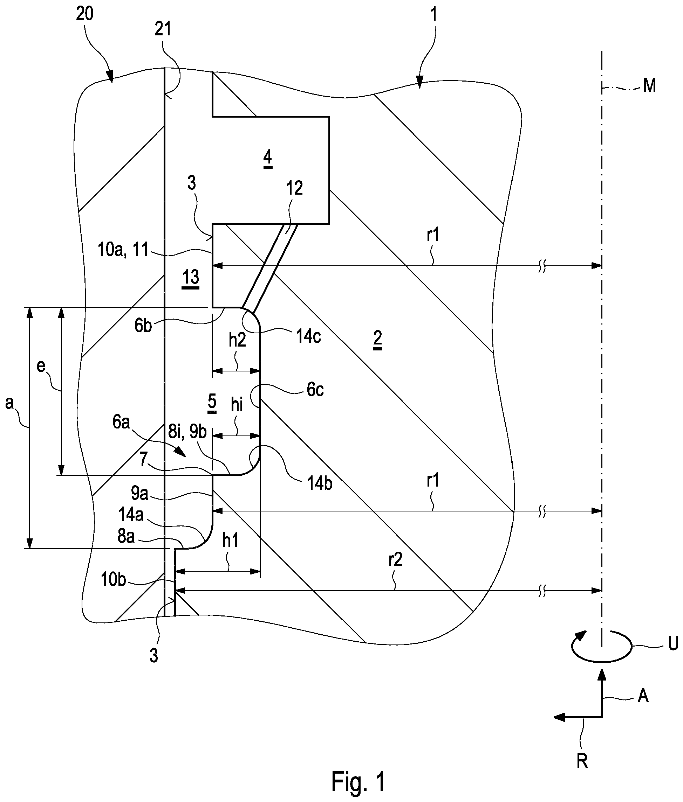

Die Figur 1 zeigt in einer Detaildarstellung eines Schnitts ein Beispiel eines erfindungsgemäßen Kolbens 1. Der Kolben 1 ist Teil einer nicht näher dargestellten Brennkraftmaschine, die einen Zylinder 20 aufweist, in welchem der Kolben 1 bewegbar angeordnet ist. Der Kolben 1 gleitet dabei in herkömmlicher Weise entlang einer Zylinderlauffläche 21 des Zylinders 20.

Der Kolben 1 erstreckt sich entlang einer axialen Richtung A - Figur 1 ist ein Längsschnitt entlang dieser axialen Richtung A - und umfasst neben einem nicht dargestellten Feuersteg sowie einem ebenfalls nicht näher dargestellten Kolbenschaft eine Ringpartie 2, die in Figur 1 ausschnittweise im Bereich eines Außenumfangs 3 des Kolbens 1 im axialen Bereich der Ringpartie 2 dargestellt ist. Im axialen Bereich der Ringpartie 2 des Kolbens 1 ist auf dessen Außenumfang 3 eine Nut 4 ausgebildet, die zur Aufnahme eines Ölabstreifrings (nicht gezeigt) dient.

Wie Figur 1 erkennen lässt, ist am Außenumfang 3 entlang der axialen Richtung A im Abstand zur Nut 4 eine weitere Nut, die sog. Zusatznut 5 angeordnet. Sowohl bei der Nut 4 als auch bei der Zusatznut 5 handelt es sich um eine Radialnut, die sich entlang einer radialen Richtung R des Kolbens 1 zu dessen Außenumfang 3 hin offen ausgebildet ist. Die radiale Richtung R erstreckt sich dabei orthogonal von einer Mittellängsachse M des Kolbens 1 weg, entlang welcher die axiale Richtung A verläuft. Sowohl die Nut 4 also auch die Zusatznut 5 laufen entlang des Außenumfangs 3 entlang einer Umfangsrichtung U, die sich sowohl senkrecht zur axialen Richtung A als zur radialen Richtung R erstreckt, um die Mittellängsachse M des Kolbens 1 um.

Im Folgenden wird anhand der Figur 1 die Geometrie der Zusatznut 5 im Detail erläutert. Gemäß Figur 1 weist die Zusatznut 5 eine axial von der Nut 4 abgewandte erste Nutflanke 6a und eine axial der Nut 4 zugewandte zweite Nutflanke 6b auf. Die beiden Nutflanken 6a, 6b sind durch einen Nutgrund 6c, der sich im Beispiel entlang der axialen Richtung A zwischen den beiden Nutflanken 6a, 6b erstreckt, miteinander verbunden. Die erste Nutflanke 6a weist eine axiale Stufe 7 auf.

Diese erste Nutflanke 6a umfasst einen radial inneren Flankenabschnitt 8i, der radial entlang der radialen Richtung R über die axiale Stufe 7 in einen radial äußeren Flankenabschnitt 8a übergeht.

Die axiale Stufe 7 der ersten Nutflanke 6a ist durch einen sich axial erstreckenden ersten Stufenabschnitt 9a gebildet, der entlang der axialen Richtung A radial nach innen unter einem 90°-Winkel in einen sich entlang der radialen Richtung R erstreckenden zweiten Stufenabschnitt 9b übergeht. Der zweite Stufenabschnitt 9b kann identisch zum radial inneren Flankenabschnitt 8i sein oder Teil des radial inneren Flankenabschnitts 8i sein.

Ausgehend vom Nutgrund 6c umfasst - in dem in Figur 1 gezeigten Längsschnitt - die erste Nutflanke 6a den sich entlang der radialen Richtung R radial nach außen erstreckenden radial inneren Flankenabschnitt 8i, der den zweiten Stufenabschnitt 9b bildet und unter einem rechten Winkel in den sich entlang der axialen Richtung von der zweiten Nutflanke 6b weg erstreckenden ersten Stufenabschnitt 9a übergeht. Der erste Stufenabschnitt 9a geht im Beispiel unter einem 90°-Winkel, in den radial äußeren Flankenabschnitt 8a über, der sich entlang der radialen Richtung R erstreckt und am Außenumfang 3 endet.

Es wird angemerkt, dass in einer alternativen Betrachtungsweise die axiale Stufe 7 der ersten Nutflanke 6a als radiale Stufe des Nutgrunds 6c interpretiert werden kann.

Eine entlang einer radialen Richtung R der Ringpartie 2 gemessene erste Flankenhöhe h1 der ersten Nutflanke 6a ist wie in Figur 1 gezeigt größer als eine ebenfalls entlang der radialen Richtung R gemessene zweite Flankenhöhe h2 der zweiten Nutflanke 6b. Eine entlang der radialen Richtung R des Kolbens 1 bzw. dessen Ringpartie 2 gemessene Abschnittshöhe hi des radial inneren Flankenabschnitts 8i ist gleich der zweiten Flankenhöhe h2, also hi = h2. Die Flankenabschnitte 8a, 8i können gegensätzlich zum in Figur 1 gezeigten Beispiel konisch ausgebildet sein. Dabei kann der Außenumfang 3 im Bereich wenigstens eines der Flankenabschnitte 8a, 8i im Längsschnitt entlang der axialen Richtung A betrachtet unter einem Winkel von 45 bis 90°, beispielsweise 60°, gegenüber der axialen Richtung angestellt sein.

Ein axial zwischen der Nut 4 und der Zusatznut 5 angeordneter axialer Abschnitt der Ringpartie 2 bzw. des Außenumfangs 3, der im Folgenden als "erster Axialabschnitt" 10a bezeichnet wird, bildet eine radial nach außen abstehende Ringrippe 11 aus. Diese axial zwischen der Nut 4 und der Zusatznut 5 angeordnete Ringrippe läuft ebenso wie die Nut 4 und die Zusatznut 5 entlang der Umfangsrichtung U um.

Ein entlang der radialen Richtung R der Ringpartie 2 gemessener Radius r1 der Ringpartie 2 des Kolbens 1 in dem ersten Axialabschnitt 10a zwischen der Nut 4 und der Zusatznut 5 ist kleiner als der entlang der radialen Richtung R der Ringpartie 2 gemessener Radius r2 in einem zweiten Axialabschnitt 10b, der sich auf einer von der Nut 4 abgewandten Seite axial an die Zusatznut 5 anschließt. Es gilt also r1 < r2. Beide Radien r1, r2 werden dabei zwischen dem Außenumfang 3 und der Mittellängsachse M des Kolbens 1 gemessen.

Demgegenüber besitzt der Kolben 1 im axialen Bereich der Ringpartie 2 zwischen Nut 4 und Zusatznut 5, also im ersten Axialabschnitt 10a, denselben entlang der radialen Richtung R zwischen Außenumfang 3 und Mittellängsachse M gemessenen Radius r1 wie im Bereich der axialen Stufe 7 bzw. im Bereich des ersten Stufenabschnitts 9a der axialen Stufe 7. Der Kolben 1 kann auf diese Weise derart beweglich im Zylinder 20 geführt sein, dass der erste Axialabschnitt 10a, also die Ringrippe 11, der Ringpartie 2 zwischen der Nut 4 und der Zusatznut 5 bezüglich der radialen Richtung R im Abstand zur Zylinderlauffläche 21 angeordnet ist.

Durch den gebildeten somit Zwischenraum 13 kann somit Öl von der Nut 4 mit dem Ölabstreifring zur Zusatznut 5 strömen.

Ein am Außenumfang 3 entlang der axialen Richtung A gemessener Abstand a zwischen der ersten und der zweiten Nutflanke 6a, 6b ist größer als eine ebenfalls entlang der axialen Richtung A gemessene Erstreckung e des Nutgrunds 6c.

Wie Figur 1 außerdem erkennen lässt, bildet der erste Axialabschnitt 10a eine am Außenumfang 3 in der Umfangsrichtung U der Ringpartie 2 umlaufende Ringrippe 11 aus. Gemäß Figur 1 kann in der Ringrippe 11 ein Ölkanal 12 ausgebildet sein, welcher die Nut 4 fluidisch mit der Zusatznut 5 verbindet. Selbstredend können mehrere solche Ölkanäle 12, die dann bevorzugt entlang der Umfangsrichtung U im Abstand zueinander angeordnet sind, vorgesehen sein. Der Ölkanal 12 bzw. die Ölkanäle 12 können dabei durch eine jeweilige durch eine Sackbohrung gebildet sein. Auf diese Weise kann Öl nicht nur über den Zwischenraum 13, sondern auch über den jeweiligen Ölkanal von der Nut 4 zur Zusatznut 5 geführt werden.

Wie Figur 1 erkennen lässt, kann der erste Stufenabschnitt 8a über eine erste Verrundung 14a in den Außenumfang 3 übergehen. Zweckmäßig kann die erste Verrundung 14a einen Innenradius von 0,25 bis 1,0 mm, besonders bevorzugt von ca. 0,5 mm, aufweisen. Ein jeweiliger Übergang vom Nutgrund 6c in die erste und zweite Nutflanke 6a, 6b ist durch eine zweite bzw. dritte Verrundung 14b, 14c gebildet, die zweckmäßig ebenso wie die erste Verrundung 14a einen Innenradius von 0,25 mm bis 1,0 mm, bevorzugt von ca. 0,5 mm, aufweisen kann.

Die Herstellung des voranstehend erläuterten, erfindungsgemäßen Kolbens kann gemäß dem erfindungsgemäßen Verfahren mit den Maßnahmen a) bis c) erfolgen, welches im Folgenden beispielhaft erläutert wird: Gemäß einer ersten Maßnahme a) wird ein Kolbenrohling bereitgestellt, in welchem die oben erläuterte Nut 4 zur Aufnahme eines Ölabstreifrings bereits vorhanden ist. Gemäß einer zweiten Maßnahme b) wird die Zusatznut 5 mit der ersten und zweiter Nutflanke 6a, 6b wie oben beschrieben, zunächst aber noch ohne die erfindungswesentliche axiale Stufe 7, auf dem Außenumfang 3 im Bereich der Ringpartie 2 des Kolbenrohlings erzeugt, indem dort Kolbenmaterial abgetragen wird.

Gemäß einer dritten Maßnahme c) wird der erfindungsgemäße Kolben 1 durch Erzeugen der axialen Stufe 7 hergestellt. Hierzu wird gleichzeitig Kolbenmaterial in der Zusatznut 5 und im axialen Bereich zwischen der Nut 4 und der Zusatznut 5, also im ersten Axialabschnitt 10a, abgetragen.

Das Abtragen von Kolbenmaterial in Maßnahme c) erfolgt bevorzugt derart, dass nach dem Abtragen von Kolbenmaterial gemäß Maßnahme c) der Kolben 1 im axialen Bereich zwischen Nut 4 und Zusatznut 5, also im ersten Axialabschnitt 10a, einen entlang der radialen Richtung R zwischen Außenumfang 3 und Mittellängsachse M gemessenen Radius mit demselben Wert r1 aufweist wie im Bereich der axialen Stufe 7 bzw. im Bereich des ersten Stufenabschnitts 9a.

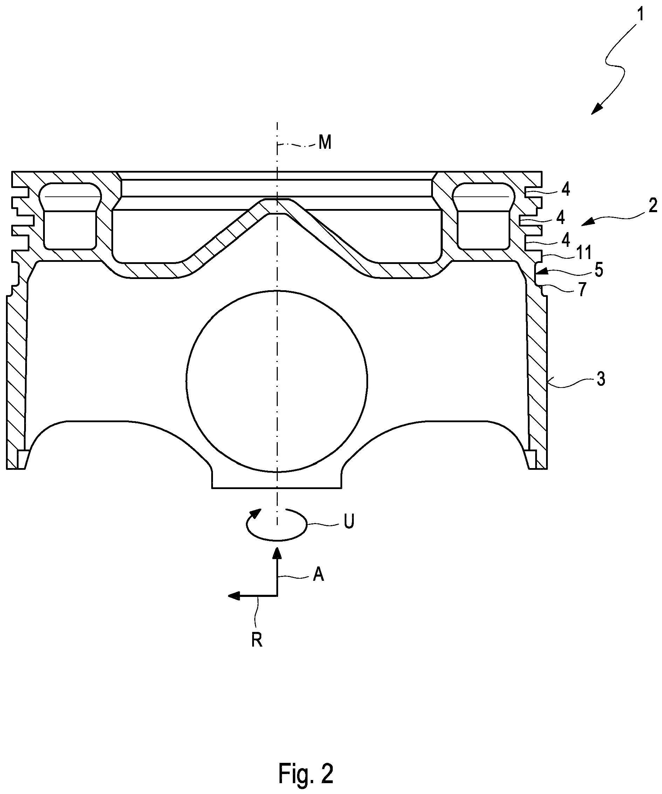

In der Figur 2 ist eine Schnittdarstellung eines weiteren Beispiels eines erfindungsgemäßen Kolbens 1 gezeigt. Der Kolben 1 der Figur 2 entspricht hinsichtlich seiner Zusatznut 5 im Wesentlichen jenem der Figur 1. Dabei kann der Figur 2 entnommen werden, dass im axialen Bereich der Ringpartie 2 des Kolbens 1 auf dessen Außenumfang 3 beispielsweise drei Nuten 4 ausgebildet sein können, die zur Aufnahme jeweils eines Kolbenrings (nicht gezeigt) dienen. Dabei kann der in der zur Zusatznut 5 nächstgelegenen Nut 4 aufnehmbare Kolbenring ein Ölabstreifring sein. Die in den übrigen Nuten 4 aufnehmbaren Kolbenringe können Kompressionsringe sein.

## Patentansprüche

1. Kolben (1) für eine Brennkraftmaschine, insbesondere für ein Kraftfahrzeug,
- mit einer sich entlang einer axialen Richtung (A) erstreckenden Ringpartie (2), an dessen Außenumfang (3) eine Nut (4) für einen Ölabstreifring ausgebildet ist,
- mit einer am Außenumfang (3) bzgl. der axialen Richtung (A) im Abstand zur Nut (4) angeordneten Zusatznut (5), die eine der Nut (4) axial abgewandte erste Nutflanke (6a) und eine der Nut (4) axial zugewandte zweite Nutflanke (6b) aufweist,
- wobei die erste Nutflanke (6a) eine axiale Stufe (7) aufweist.

2. Kolben nach Anspruch 1,
**dadurch gekennzeichnet, dass**
eine entlang einer radialen Richtung (R) des Kolbens (1) gemessene erste Flankenhöhe (h1) der ersten Nutflanke (6a) größer ist als eine ebenfalls entlang der radialen Richtung (R) gemessene zweite Flankenhöhe (h2) der zweiten Nutflanke (6b).

3. Kolben nach Anspruch 2,
- **dadurch gekennzeichnet, dass**
die erste Nutflanke (6a) einen radial inneren Flankenabschnitt (8a) aufweist, der entlang der radialen Richtung (R) der Ringpartie (2) nach außen über die axiale Stufe (7) in einen radial äußeren Flankenabschnitt (8a) übergeht; und dass
- eine entlang der radialen Richtung (R) des Kolbens (1) gemessene Abschnittshöhe (hi) des radial inneren Flankenabschnitts (8i) gleich der zweiten Flankenhöhe (h2) der zweiten Nutflanke (6b) ist.

4. Kolben nach einem der Ansprüche 1 bis 3,
**dadurch gekennzeichnet, dass**
ein entlang der radialen Richtung (R) gemessener Radius (r1) der Ringpartie (2) in einem ersten Axialabschnitt (10a) zwischen der Nut (4) und der Zusatznut (5) kleiner ist als in einem zweiten Axialabschnitt (10b), der sich auf einer von der Nut (4) abgewandten Seite axial an die Zusatznut (5) anschließt.

5. Kolben nach Anspruch 4,
**dadurch gekennzeichnet, dass**
der erste Axialabschnitt (10a) eine am Außenumfang (3) der Ringpartie (2) umlaufende Ringrippe (11) ausbildet.

6. Kolben nach Anspruch 5,
**dadurch gekennzeichnet, dass**
die Ringrippe (11) wenigstens einen Ölkanal (12) aufweist, welcher die Nut (4) fluidisch mit der Zusatznut (5) verbindet.

7. Kolben nach Anspruch 6,
**dadurch gekennzeichnet, dass**
der wenigstens eine Ölkanal (12) durch eine Sackbohrung gebildet ist.

8. Kolben nach einem der vorhergehenden Ansprüche,
**dadurch gekennzeichnet, dass**
die axiale Stufe (7) der ersten Nutflanke (6a) durch einen sich axial erstreckenden ersten Stufenabschnitt (9a) gebildet ist, der unter einem 90°-Winkel in einen sich radial erstreckenden zweiten Stufenabschnitt (9b) übergeht.

9. Kolben nach Anspruch 8,
**dadurch gekennzeichnet, dass**
- der radial innere Flankenabschnitt (8i) der zweiten Nutflanke (6b) den zweiten Stufenabschnitt (9b) umfasst,
- der erste Stufenabschnitt (9a) über eine (erste) Verrundung (14a) in den radial äußeren Flankenabschnitt (8a) übergeht.

10. Kolben nach Anspruch 9,
**dadurch gekennzeichnet, dass**
die Verrundung (14a) einen Innenradius von 0,25 bis 1,0 mm, besonders bevorzugt einen Innenradius von ca. 0,5 mm, aufweist.

11. Kolben nach einem der vorhergehenden Ansprüche,
**dadurch gekennzeichnet, dass**
ein zwischen den beiden Nutflanken (6a, 6b) gebildeter Nutgrund (6c) sich entlang der axialen Richtung (A) erstreckt.

12. Kolben nach einem der vorhergehenden Ansprüche,
**dadurch gekennzeichnet, dass**
am Außenumfang (3) ein entlang der axialen Richtung (A) gemessener Abstand (a) zwischen der ersten und der zweiten Nutflanke (6a, 6b) größer ist als eine ebenfalls entlang der axialen Richtung (A) gemessene Erstreckung (e) des Nutgrunds (6c).

13. Kolben nach einem der vorhergehenden Ansprüche,
**dadurch gekennzeichnet, dass**
ein Übergang vom Nutgrund (6c) in die erste oder/und zweite Nutflanke (6a, 6b) durch eine Verrundung (14b, 14c) gebildet ist, die vorzugsweise einen Innenradius von 0,25 mm bis 1,0 mm, besonders bevorzugt einen Innenradius von ca. 0,5 mm, aufweist.

14. Brennkraftmaschine, insbesondere für eine Kraftfahrzeug,
- mit einem Kolben (1) nach einem der vorhergehenden Ansprüche,
- mit einem eine Zylinderlauffläche (21) aufweisenden Zylinder (20), in welchem der Kolben (1) vorzugsweise derart beweglich geführt ist, dass der erste Axialabschnitt (10a) der Ringpartie (2) zwischen der Nut (4) und der Zusatznut (5) im Abstand, insbesondere unter Ausbildung eines Zwischenraums (13), zur Zylinderlauffläche (21) angeordnet ist.

15. Verfahren zum Herstellen eines Kolbens (1) nach einem der vorhergehenden Ansprüche, umfassend die folgenden Maßnahmen:
a) Bereitstellen eines Kolbenrohlings mit der Nut (4);
b) Erzeugen der Zusatznut (5) mit erster Nutflanke (6a) und mit zweiter Nutflanke (6b) ohne axiale Stufe (7) auf dem Außenumfang (3) im Bereich der Ringpartie (2) des Kolbenrohlings durch Abtragen von Kolbenmaterial;
c) Herstellen des Kolbens (1) durch Erzeugen der axialen Stufe (7) mittels gleichzeitigen Abtragens von Kolbenmaterial in der Zusatznut (5) und im axialen Bereich zwischen der Nut (4) und der Zusatznut (5).

16. Verfahren nach Anspruch 15,
**dadurch gekennzeichnet, dass**
das Abtragen von Kolbenmaterial in Maßnahme c) derart erfolgt, dass nach dem Abtragen der Kolben (1) im axialen Bereich zwischen Nut (4) und Zusatznut (5) der Radius des Kolbens (1) denselben Wert aufweist wie im Bereich der axialen Stufe (7).
